# EUROPÄISCHE PATENTANMELDUNG

(11) **EP 1 079 135 A2**
(43) Veröffentlichungstag der Anmeldung: **28.02.2001**
(21) Anmeldenummer: 00115823.7
(22) Anmeldetag: 22.07.2000
(51) Int. Cl.: F16D 65/12

(54) **Bremssystem**

(30) Priorität: 26.08.1999 DE 19940570
(71) Anmelder: Dr.Ing. h.c.F. Porsche Aktiengesellschaft, 70435 Stuttgart (DE)
(72) Erfinder: Martin, Roland, 71287 Weissach (DE)

(57) **Zusammenfassung**

Die Erfindung betrifft ein Bremssystem (1) bestehend aus einer Bremsscheibe (2) aus einem faserverstärktem Carbon-Siliziumkarbid-Werkstoff (C/C-SiC-Werkstoff) und einem Reibbelag (3). Um ein Bremssystem (1) zu schaffen, das eine verbesserte Leistung bei gleichzeitig verbesserter Lebensdauer aufweist, wird vorgeschlagen, nur einen Reibring (4) aus C/C-SiC-Werkstoff auszuführen und darüber hinaus den Reibring (4) nur punktuell mit einem Träger (5) zu verbinden.

## Beschreibung

Die Erfindung betrifft ein Bremssystem bestehend aus einer Bremsscheibe aus einem faserverstärktem Carbon-Siliziumkarbid-Werkstoff (C/C-SiC-Werkstoff) und einem Reibbelag.

Zur Herstellung einer solchen Bremsscheibe werden Formkörper aus kohlenstoffaserverstärkten Kohlenstoff (sog. Grünlinge) mit flüssigem Silizium infiltriert und einer Wärmbehandlung unterworfen, wobei das Silizium sich mit Kohlenstoff zu SiC umwandelt, so daß sich insgesamt ein sogenannter C/C-SiC-Werkstoff ergibt.

Hierzu zeigt die DE 44 38 455 C1 ein Verfahren zur Herstellung einer C/C-SiC-Bremsscheibe mit Kanälen und geschlossenen Hohlräumen. In den unbehandelten Kohlenstoff-Körper (Grünling) werden Hohlräume und Aussparungen noch vor dem Silizieren eingebracht. Es ist auch vorgesehen, die Bremsscheibe aus zwei Hälften zusammenzusetzen, wobei in die Hälften vor dem Silizieren Kanäle und Aussparungen eingearbeitet werden und die Hälften durch das Silizieren dann untrennbar miteinander verbunden werden.

Aus der DE 197 27 586 A1 geht bereits ein Bremseinheit aus Bremsscheibe und Bremsbelag hervor, bei der eine Bremsscheibe C/SiC-Verbundkeramik mit einem Bremsbelag aus demselben Material kombiniert ist. Hierbei soll der C/C-Vorkörper des Bremsbelages wenigstens im oberflächennahen Bereich eine höhere Dichte als die des C/C-Vorkörpers der Bremsscheibe aufweisen. Vor allem auf Grund der hohen Oberflächenhärte der silizierten Reibpartner ist das Reibverhalten jedoch nicht befriedigend.

Ferner zeugt die DE 197 27 587 A1 eine Bremseinheit aus Bremsscheibe und Bremsbelag, bei der eine Bremsscheibe aus thermisch hoch belastbaren Material, vorzugsweise eine kurzfaserverstärkte C/SiC-Keramikbremsscheibe, mit einem Bremsbelag mit organisch gebundener Matrix kombiniert ist. Die Bremsscheibe ist dabei so ausgelegt, daß die Wärmeleitfähigkeit senkrecht zur Scheibenoberfläche mindestens 20 W/mK beträgt. Vorzugsweise soll die Wärmeleitfähigkeit im Bereich 30 bis 40 W/mK eingestellt werden. Durch die gute Wärmeleitfähigkeit können in Verbindung mit der Keramikbremsscheibe auch konventionelle, organisch gebundene Bremsbeläge eingesetzt werden. Die hierbei erzielten Standzeiten sind jedoch nicht befriedigend.

Schließlich ist aus der DE 197 27 585 A1 eine Bremseinheit aus Bremsscheibe und Bremsbelag bekannt geworden, bei der eine Bremsscheibe aus einem thermisch hochbelastbaren Material, vorzugsweise einem kurzfaserverstärkten C/SiC-Keramikmaterial, besteht. Der Bremsbelag besteht aus einem Sintermetall-Werkstoff oder einem anorganisch gebundenen Werkstoff mit keramischer Binderphase und Metallpartikeln. Der Sintermetall-Werkstoff soll aus Kupfer, Kupferlegierung, Eisen oder Eisenlegierungen sowie weiteren Zusatzstoffen bestehen. Im Ausführungsbeispiel sind 80 bis 90 Gew.-% Metall, aus 2/3 Stahlwolle und 1/3 Kupferpulver, vorgesehen.

Gegenüber diesem Stand der Technik ist es Aufgabe der Erfindung, ein gattungsgemäßes Bremssystem zu schaffen, das eine verbesserte Leistung bei gleichzeitig verbesserter Lebensdauer aufweist.

Erfindungsgemäß wird diese Aufgabe mit den Merkmalen des unabhängigen Patentanspruches gelöst. Es wird vorgeschlagen, nur einen Reibring aus C/C-SiC-Werkstoff auszuführen und darüber hinaus den Reibring nur punktuell mit einem Träger zu verbinden. Ein solcher Träger kann sowohl ein separater Bremstopf wie auch eine Radnabe selbst sein. Durch diese Ausbildung wird aus dem C/C-SiC-Werkstoff ein geometrisch vergleichsweise einfacher Gegenstand geschaffen, bei dem unter Wärmeeinfluß allenfalls geringe Zugspannungen entstehen. In vorteilhafter Weise wird hiermit die Rißbildung im C/C-SiC-Werkstoff vermindert und somit die Lebensdauer des Reibringes erhöht. Die nur punktuelle Verbindung mit dem Träger trägt darüber hinaus dazu bei, daß durch unterschiedliche Wärmeausdehnungen im Träger und im Reibring keine Risse entstehen können, da eine solche Anbindung weich ausgeführt werden kann. Schließlich ist durch die punktuelle Anbindung der Wärmeübergang zwischen dem Reibring und dem Träger verschlechtert, so daß der hochwärmebeständige Reibring aus C/C-SiC-Werkstoff bei gleichbleibender Wärmebelastung des Trägers nun höher belastbar ist.

Vorteilhafte Weiterbildungen der Erfindung sind in den Unteransprüchen beschrieben.

So wird vorgeschlagen, zur Verbindung des Reibringes mit dem Träger Bolzen vorzusehen. Diese Bolzen weisen jeweils einen Kopf auf, der in radialer Richtung, beispielsweise in Nuten des Trägers, beweglich gehalten ist. Durch diese Art der Befestigung ist einerseits die sichere Übertragung der beim Bremsen auftretenden Kräfte sichergestellt. Andererseits können sich Träger und Reibring unabhängig voneinander bei Wärmeeinwirkung ausdehnen, so daß die Entstehung von Wärmespannungen sicher verhindert ist. Darüber hinaus ist zur Aufnahme des Reibringes eine Hülse vorgesehen. Damit stützt sich das am Bolzen vorzusehende Befestigungselement an der Hülse und nicht am Reibring ab. Durch diese Maßnahme wird sichergestellt, daß beim Befestigen des Bolzens nicht versehentlich Kräfte in den Reibring eingeleitet werden können, die unter Umständen zur Schädigung des Reibringes führen könnten. Darüber hinaus kann durch diese Maßnahme sichergestellt werden, daß im Verbindungsbereich zwischen Bolzen und Reibring keine unerwünschten Wärmespannungen entstehen. Der zwischen dem

Träger und dem Reibring vorgesehene Luftspalt schließlich schafft in vorteilhafter Weise eine weitere Verminderung des Wärmeüberganges zwischen dem Reibring und dem Träger. Ein solcher Luftspalt kann besonders einfach dadurch geschafft werden, daß am Kopf des Bolzens ein entsprechender, beispielsweise scheibenförmiger, Absatz vorgesehen ist.

Zur weiteren Steigerung der Leistungsfähigkeit sind im Reibring evolventförmige Kühlkanäle vorgesehen. Gegenüber radial angeordneten, beispielsweise als zylindrische Bohrung ausgeführten Kühlkanälen weisen diese den Vorteil auf, daß durch ein höheres Druckgefälle ein größerer Luftdurchsatz erzielbar ist. Darüber hinaus wird ein Rubbeln der Bremsscheibe vermieden, da die zwischen den Kühlkanälen gebildeten Rippen im Einlaufbereich des Reibbelages schräg zu einer einlaufenden Kante des Reibbelages stehen. Zur weiteren Verbesserung der Kühlung können im Reibring Bohrungen vorgesehen sein, die sich in axialer Richtung von der Oberfläche des Reibringes mittig in den Kühlkanal erstrecken. Diese Anordnung beruht auf der Erkenntnis, daß bei einem Reibring aus C/C-SiC-Werkstoff bei einer solchen Anordnung keine Rißbildung zu befürchten ist, wie dies beispielsweise bei einem Reibring aus Grauguß der Fall ist. Ein Reibring aus Grauguß kann daher nur Bohrungen aufweisen, mit denen die Rippen angeschnitten werden. Ein Reibring mit Kühlkanälen und/oder Bohrungen soll vorzugsweise in einem Verfahren hergestellt sein, bei dem der Reibring aus zwei zusammengesetzten Hälften besteht. Bereits bei der Herstellung des Formkörpers aus kohlenstofffaserverstärktem Kohlenstoff (den sogenannten Grünlingen) können hierbei die Kühlkanäle und ggf. auch die Bohrungen vorgesehen werden. Auch die weitere, insbesondere sparende Bearbeitung kann vorzugsweise an den Grünlingen erfolgen, da diese weich und daher leicht zu bearbeiten sind. Sofern die Bohrungen nicht bereits beim Formen der Grünlinge eingebracht wurden, können die Bohrungen auch in diesem Schritt durch Bohren eingebracht werden. Anschließend werden die beiden Hälften des Reibringes durch Silizieren untrennbar miteinander verbunden. Der fertige Reibring erfordert nun nur noch eine minimale Nachbearbeiturig, z.B. durch Feinschleifen im Bereich der Reibflächen, um hier die geforderten Oberflächengüte einzustellen.

Für den Reibbelag soll vorteilhafter Weise ein Kupfer-Sinterwerkstoff mit einem Kupferanteil von mehr als 60 %, vorzugsweise im wesentlichen in einem Bereich von 60% bis 70%, verwendet sein. Diese Reibpaarung weist neben einem sehr konstanten Reibwert-Verhalten über einen weiten Geschwindigkeits- und Temperaturbereich auch ein sehr gutes Ansprechverhalten sowohl im kalten wie auch im warmen Zustand auf. Hervorzuheben sind darüber hinaus das gute Naßbremsverhalten, die hohe Resistenz gegen Korrosionseinflüsse und schließlich auch das sehr gute wärmedynamische Verhalten, d.h. eine hohe Abkühlgeschwindigkeit. Zusätzlich können Beimischungen von Graphit, Ferrochrom oder Eisen eingesetzt werden. Als Bindemittel können Kupfer, Zink und Silber oder Mischungen hieraus verwendet werden. Ein derartiger Reibbelag kann durch Variation der

Zusammensetzung hinsichtlich seiner Eigenschaften Wärmeleitung, Reibverhalten über der Temperatur, Verschleiß und Kompressionsverhalten auf den Werkstoff des Reibringes abgestimmt werden. Von besonderem Vorteil ist es hierbei, daß das Verschleißverhalten so einstellbar ist, daß eine Lebensdauer von Reibbelag und Bremsscheibe entsprechend einer Fahrleistung bei Pkw von 100.000 km oder mehr erreichbar ist.

Zur weiteren Steigerung der Leistungsfähigkeit können Isoliermaßnahmen vorgesehen sein, um das weitere Bremssystem, besonders die Bremsflüssigkeit, gegen unzulässige Erwärmung zu schützen. In diesem Sinne wird vorgeschlagen, an einer Rückseite der Reibbeläge Mittel zur Wärmeisolierung vorzusehen, um so den Wärmeübergang an der Kontaktfläche zwischen Reibbelag und Bremssattel zu vermindern. Derartige Mittel können beispielsweise eine Keramik-Beschichtung der Rückseite des Reibbelages oder ein an der Rückseite des Reibbelages vorgesehene Sandwich-Blech sein. Zur Reduzierung des Wärmeüberganges durch Strahlungswärme können zusätzlich am Bremssattels Mittel zur Wärmeisolierung vorgesehen sein. Hier kann beispielsweise Wärmeschutzfolie verwendet werden, die auf ihrer dem Bremssattel abgewandten Seite reflektierend und auf ihrer dem Bremssattel zugewandten Seite isolierend beschichtet ist. Diese Maßnahme ist an allen Flächen des Bremssattels vorzusehen, die dem Reibring zugewandt sind.

Die Erfindung ist nachstehend anhand des in den Figuren ausgefüllten Ausführungsbeispieles näher dargestellt. Es zeigen:
Fig. 1 einen Hauptschnitt durch ein erfindungsgemäßes Bremssystem,
Fig. 2 eine Detailansicht eines Schnittes durch einen Reibring und
Fig. 3 eine Vorderansicht eines teilweise geschnittenen Reibringes.

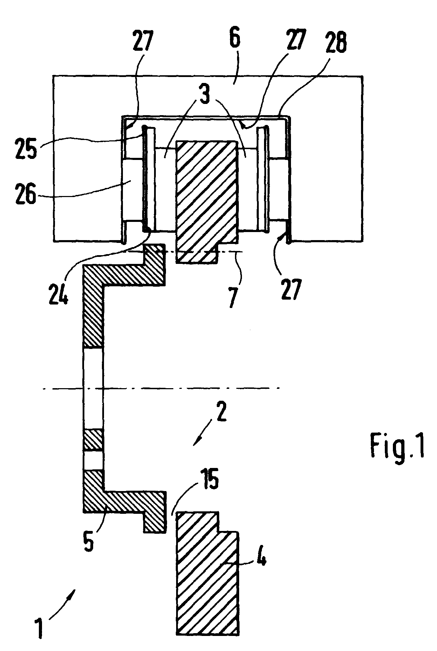

Das in Figur 1 in einem Hauptschnitt dargestellte Bremssystem 1 besteht aus einer Bremsscheibe 2 und zwei Reibbelägen 3. Die Bremsscheibe 2 ist zweiteilig ausgeführt und besteht aus einem Reibring 4, der an einem Bremstopf 5 gehalten ist. Die Bremsbeläge 3 stehen im Eingriff mit dem Reibring 4 und werden durch einen Bremssattel 6 an den Reibring 4 angepreßt.

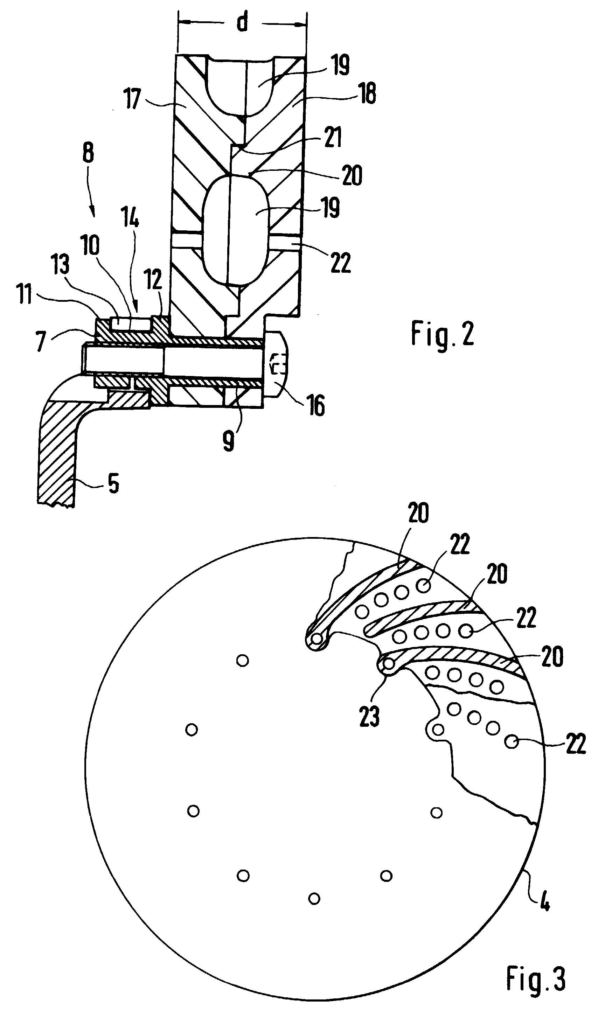

Figur 2 zeigt in einer Detailansicht den Aufbau des Reibringes 4 sowie die Anbindung des Reibringes 4 an den Bremstopf 5. Der Reibring 4 ist mit dem Bremstopf 5 durch Bolzen 7 verbunden, Diese Bolzen 7 weisen einen Kopf 8 und eine Hülse 9 auf. Der Kopf 8 weist eine rechteckige Absetzung 10 auf, die zwischen zwei scheibenförmigen Abschnitten 11 und 12 angeordnet ist. Die Absetzung 10 ist in einer Nut 13 aufgenommen, die ihrerseits an einem parallel zum Reibring 4 verlaufenden Rand 14 des Bremstopfes 5 gebildet ist. Der zweite scheibenförmige Abschnitt 12 des Bolzens 7 sorgt dafür, daß zwischen dem Reibring 4 und dem Bremstopf 5 ein Luftspalt 15 (vgl. Fig. 1) gebildet ist. Die Länge der

Hülse 9 entspricht in etwa dem Dickenmaß d des Reibringes 4. Eine Schraube 16, die zur Befestigung des Reibringes 4 in den Bolzen 7 eingeschraubt ist, stützt sich an der Hülse 9 ab. Durch entsprechende Abstimmung des Längenmaßes der Hülse 9 zum Dickenmaß d des Reibringes 4 kann eingestellt werden, ob die von der Schraube 16 erfolgte Vorspannkraft im wesentlichen über die Hülse 9 oder über den Reibring 4 auf den Kopf 8 des Bolzens 7 eingeleitet werden soll. Im vorliegenden Beispiel stützt sich die Schraube 16 im wesentlichen an der Hülse 9 ab, so daß der Reibring 4 mit geringer Vorspannung auf dem Bolzen 7 gehalten ist. Außerdem ist durch die Hülse 9 die Wärmebelastung der Schraube 16 durch Wärmeeintrag aus dem Reibring 4 vermindert.

Der Reibring 4 besteht aus zwei Hälften 17, 18, die ursprünglich aus C/C-Werkstoff gefertigt sind und durch Silizieren miteinander zu einer Einheit verbunden wurden. Innerhalb des Reibringes 4 sind Kühlkanäle 19 angeordnet, zwischen denen Rippen 20 gebildet sind. Eine Trennfuge 21, die ursprüngliche zwischen den Hälften 18 und 19 im Bereich der Rippen 20 gebildet ist, ist gestuft ausgeführt, um so die beiden Hälften 18 und 19 während des Fertigungsprozesses sicher gegeneinander zu positionieren.

Wie im Teilschnitt nach Fig. 3 näher zu erkennen, sind die Kühlkanäle 19 evolventenförmig ausgeführt, d.h. ihr Querschnitt erweitert sich stetig zur Außenseite des Reibringes 4 hin. In etwa mittig der Kühlkanäle 19 sind jeweils in Reihen angeordnete Bohrungen 22 vorgesehen. Durch diese Bohrungen 22 ist die Wärmeabfuhr von der Oberfläche des Reibringes 4 verbessert, da die Bohrungen 20 aufgrund des in den Kühlkanälen 19 herrschenden Druckgefälles intensiv durchströmt werden. Außerdem dienen die Bohrungen 22 zur Verbesserung des Ansprechverhaltens des Bremssystems 1 bei Nässe, da ein auf der Oberfläche des Reibringes 4 befindlicher Wasserfilm durch die Reibbeläge 3 in die Bohrungen 22 und nachfolgend die Kühlkanäle 19 rasch verdrängt werden kann.

Zur Aufnahme der Bolzen 7 sind an der Innenseite des Reibringes 4 Augen 23 vorgesehen, die sich über die dem Bremstopf 5 zugewandte Hälfte 17 oder beide Hälften 17, 18 des Reibringes 4 erstrecken können.

Die Reibbeläge 3 bestehen aus einem Kupfer-Sinterwerkstoff mit einem Kupferanteil zwischen 60 und 70 Gewichtsprozenten. Da sowohl der Reibring 4 wie auch die Reibbeläge 3 sehr temperaturfest sind, sind an den Rückseiten 24 der Reibbeläge Sandwichbleche 25 vorgesehen, die den Wärmeübergang von den Reibbelägen 3 auf Bremskolben 26 und damit auf den Bremssattel 6 vermindern. Zusätzlich sind die Innenflächen 27 des Bremssattels 6 mit einer Wärmeschutzfolie 28 versehen, die eine Wärmeübertragung durch die vom Reibring 4 und den Reibbelägen 3 ausgehende Wärmestrahlung auf den Bremssattel 6 vermindert.

## Patentansprüche

1. Bremssystem, bestehend aus einer Bremsscheibe (2) aus C/C-SiC-Werkstoff und Reibbelägen (3), **dadurch gekennzeichnet,** daß nur ein Reibring (4) aus C/C-SiC-Werkstoff besteht und der Reibring punktuell mit einem Träger (5) verbunden ist.

2. Bremssystem nach Anspruch 1, **dadurch gekennzeichnet,** daß zur Verbindung des Reibringes mit dem Träger Bolzen (7) vorgesehen sind, dessen Kopf (8) im Träger (5) radial beweglich gehalten ist und der zur Aufnahme des Reibringes (4) eine Hülse (9) aufweist, und wobei zwischen dem Träger und dem Reibring ein Luftspalt (15) gebildet ist.

3. Bremssystem nach Anspruch 1 oder 2, **dadurch gekennzeichnet,** daß der Reibring (4) evolventenförmige Kühlkanäle (19) aufweist.

4. Bremssystem nach Anspruch 3 **dadurch gekennzeichnet,** daß im Reibring (4) Bohrungen (22) vorgesehen sind, die sich von der Außenseite des Reibringes in die Kühlkanäle (19) erstrecken.

5. Bremssystem nach einem der vorstehenden Ansprüche, **dadurch gekennzeichnet,** daß der Reibring (4) aus zwei Hälften (17, 18) besteht, die vor einem Silizieren bearbeitet und durch das Silizieren miteinander verbunden sind.

6. Bremssystem nach einem der vorstehenden Ansprüche, **dadurch gekennzeichnet,** daß die Reibbeläge (3) aus einem Kupfer-Sinterwerkstoff mit einem Kupferanteil von mehr als 60%, vorzugsweise im wesentlichen im Bereich von 60% bis 70%, besteht und eine oder mehrere Beimischungen aus der Gruppe der Werkstoffe: Graphit, Ferrochrom und Eisen aufweist.

7. Bremssystem nach einem der vorstehenden Ansprüche, **dadurch gekennzeichnet,** daß an Rückseiten (24) der Reibbeläge (3) Mittel (25) zur Wärmeisolierung vorgesehen sind.

8. Bremssystem nach einem der vorstehenden Ansprüche, **dadurch gekennzeichnet,** daß an einer Innenseite eines die Reibbeläge (39 aufnehmenden Bremssattels (6) Mittel (28) zur Wärmeisolierung vorgesehen sind.
